# EUROPEAN PATENT APPLICATION

(11) **EP 4 080 614 A1**
(43) Date of publication of application: **26.10.2022**
(21) Application number: 21747086.3
(22) Date of filing: 29.01.2021
(51) Int. Cl.: H01M 4/525, H01M 4/505, C01G 53/00, H01M 10/052

(54) **POSITIVE ELECTRODE ACTIVE MATERIAL PRECURSOR FOR SECONDARY BATTERY, POSITIVE ELECTRODE ACTIVE MATERIAL, AND LITHIUM SECONDARY BATTERY COMPRISING SAME**

(30) Priority: 29.01.2020 KR 20200010699
(71) Applicant: Lg Chem, Ltd., Seoul 07336 (KR)
(72) Inventor: JEONG, Jin Hoo, Daejeon 34122 (KR); JEONG, Myung Gi, Daejeon 34122 (KR); JU, Jin Wook, Daejeon 34122 (KR); JUNG, Ji Hun, Daejeon 34122 (KR); LEE, Eung Ju, Daejeon 34122 (KR)
(74) Representative: Hoffmann Eitle
(86) International application number: PCT/KR2021/001197
(87) International publication number: WO 2021/154021

(57) **Abstract**

The present invention relates to a positive electrode active material precursor, a method of preparing the same, and a positive electrode active material prepared by using the positive electrode active material precursor, wherein the positive electrode active material precursor of the present invention is a positive electrode active material precursor composed of a hydroxide represented by Formula 1, wherein the positive electrode active material precursor is a secondary particle, in which a plurality of primary particles are aggregated, and includes crystallines in which major axes of the primary particles are arranged in a direction from a center of the secondary particle toward a surface thereof and a (001) plane of the primary particle is arranged parallel to the major axis of the primary particle.

## Description

### TECHNICAL FIELD

This application claims priority from Korean Patent Application No. 10-2020-0010699, filed on January 29, 2020, the disclosure of which is incorporated by reference herein.

The present invention relates to a positive electrode active material precursor for a secondary battery, a positive electrode active material, preparation methods thereof, and a lithium secondary battery including the positive electrode active material.

### BACKGROUND ART

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted.

In the lithium secondary battery in a state in which an organic electrolyte solution or a polymer electrolyte solution is filled between a positive electrode and a negative electrode which are respectively formed of active materials capable of intercalating and deintercalating lithium ions, electrical energy is produced by oxidation and reduction reactions when the lithium ions are intercalated/deintercalated into/from the positive electrode and the negative electrode.

Lithium cobalt oxide (LiCoO₂), lithium nickel oxide (LiNiO₂), lithium manganese oxide (LiMnO₂ or LiMn₂O₄, etc.), or a lithium iron phosphate compound (LiFePO₄) has been used as a positive electrode active material of the lithium secondary battery. Among them, the lithium cobalt oxide (LiCoO₂) has been widely used because of its high operating voltage and excellent capacity characteristics, and has been used as a positive electrode active material for high voltage. However, due to an increase in the price of cobalt (Co) and supply instability, there is a limitation in using a large amount of the lithium cobalt oxide as a power source for applications such as electric vehicles, and thus, there is a need to develop a positive electrode active material that may replace the lithium cobalt oxide.

Accordingly, a nickel cobalt manganese-based lithium composite transition metal oxide (hereinafter, simply referred to as "NCM-based lithium composite transition metal oxide"), in which a portion of cobalt (Co) is substituted with nickel (Ni) and manganese (Mn), has been developed. Recently, as the demand for high-capacity batteries increases, techniques for increasing the capacity by increasing a nickel content in an NCM-based positive electrode active material are being studied. With respect to a high-nickel NCM-based positive electrode active material containing a high concentration of nickel, capacity characteristics are excellent, but there has been a problem in that life characteristics are degraded due to low structural stability. Thus, a method of improving the structural stability by doping the high-nickel NCM-based positive electrode active material with aluminum (Al) has been proposed. As a conventional method of doping the NCM-based positive electrode active material with Al, a dry doping method, in which an aluminum-containing raw material was mixed together, when mixing a positive electrode active material precursor and a lithium raw material, and then sintered, or a wet doping method, in which a positive electrode active material precursor was doped with Al by performing a co-precipitation reaction using a metal solution containing nickel, manganese, cobalt, and aluminum during the preparation of the precursor, was used.

However, with respect to the dry doping, there is a problem in that it is difficult to uniformly distribute the aluminum (Al) in the NCM-based positive electrode active material and doping of a lithium layer with the aluminum may not be controlled. Also, with respect to the aluminum (Al) wet doping in which the aluminum (Al) doping is performed during the co-precipitation of the NCM-based positive electrode active material precursor, since an unwanted side reaction with anions occurs if aluminum cations are dissolved in the transition metal solution containing nickel cobalt manganese cations together and used as in a conventional case, growth of the precursor is interfered or there has been difficulties in controlling crystal orientation.

Thus, there is a need to develop a positive electrode active material precursor and a positive electrode active material which may exhibit excellent life characteristics and resistance characteristics when used in a lithium secondary battery.

### <Prior Art Documents>

(Patent Document 1) Korean Patent Application Laid-Open Publication No. 2017-0063418

### DISCLOSURE OF THE INVENTION

### TECHNICAL PROBLEM

An aspect of the present invention provides a positive electrode active material precursor, which may significantly improve life characteristics and resistance increase when used in a lithium secondary battery, and a method of preparing the same.

Another aspect of the present invention provides a positive electrode active material prepared by using the positive electrode active material precursor, and a secondary battery positive electrode and a lithium secondary battery which include the positive electrode active material.

### TECHNICAL SOLUTION

According to an aspect of the present invention, there is provided a positive electrode active material precursor for a secondary battery which is composed of a hydroxide represented by Formula 1, wherein the positive electrode active material precursor is a secondary particle, in which a plurality of primary particles are aggregated, and includes crystallines in which major axes of the primary particles are arranged in a direction from a center of the secondary particle toward a surface thereof and a (001) plane of the primary particle is arranged parallel to the major axis of the primary particle.

[Formula 1] Niₓ₁Co_{y1}Mn_{z1}Alₛ₁(OH)₂

In Formula 1, 0.7≤x1≤0.99, 0<y1<0.3, 0<z1<0.3, and 0.01≤s1≤0.1.

According to another aspect of the present invention, there is provided a method of preparing a positive electrode active material precursor for a secondary battery which includes: preparing a transition metal-containing solution containing cations of nickel (Ni), cobalt (Co), and manganese (Mn) and an aluminum-containing solution containing cations of aluminum (Al); and respectively adding the transition metal-containing solution and the aluminum-containing solution to a reactor, and forming a positive electrode active material precursor by a co-precipitation reaction while adding a basic aqueous solution and an ammonium solution.

According to another aspect of the present invention, there is provided a method of preparing a positive electrode active material for a secondary battery which includes: mixing the positive electrode active material precursor prepared as described above with a lithium source and sintering the mixture to form a lithium transition metal oxide.

According to another aspect of the present invention, there is provided a positive electrode active material including a lithium transition metal oxide represented by Formula 2, wherein the lithium transition metal oxide is a secondary particle, in which a plurality of primary particles are aggregated, and includes crystallines in which major axes of the primary particles are arranged in a direction from a center of the secondary particle toward a surface thereof and a (003) plane of the primary particle is arranged parallel to the major axis of the primary particle.

[Formula 2] Liₐ[Ni_{b}Co_{c}Mn_{d}Alₑ]_{1-f}M¹_{f}O₂

In Formula 2, M¹ is at least one selected from the group consisting of Zr, B, W, Mg, Ce, Hf, Ta, La, Ti, Sr, Ba, F, P, and S, and 0.8≤a≤1.2, 0.7≤b≤0.99, 0<c<0.3, 0<d<0.3, 0.01≤e≤0.1, and 0≤f≤0.1.

According to another aspect of the present invention, there is provided a positive electrode and a lithium secondary battery which include the positive electrode active material.

### ADVANTAGEOUS EFFECTS

According to the present invention, a positive electrode active material precursor, which may significantly improve life characteristics and resistance increase, and a positive electrode active material prepared by using the same may be provided.

Also, life characteristics and resistance characteristics of a lithium secondary battery using the positive electrode active material may be significantly improved.

### BRIEF DESCRIPTION OF THE DRAWINGS

FIG. 1 is a cross-sectional transmission electron microscope (TEM) image of a positive electrode active material precursor prepared in Example 1;
FIG. 2 is a cross-sectional TEM image of a positive electrode active material prepared in Example 2;
FIG. 3 is a scanning electron microscope (SEM) image of a positive electrode active material precursor prepared in Comparative Example 1;
FIG. 4 is a cross-sectional TEM image of a positive electrode active material prepared in Comparative Example 2; and
FIG. 5 is a graph illustrating cycle characteristics of lithium secondary batteries respectively using the positive electrode active materials prepared in Example 2 and Comparative Example 2.

### BEST MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "crystalline" means a single crystal unit having a regular atomic arrangement. An arrangement of crystal planes of the crystalline in the present invention may be confirmed by transmission electron microscope (TEM) analysis of a cross section of a positive electrode active material precursor or positive electrode active material particle to be measured, and, in this case, the TEM analysis may be performed using a selected area diffraction pattern (SADP) and/or FAST Fourier Transform (FFT).

In the present invention, the expression "primary particle" denotes a smallest particle unit which is distinguished as one body when a cross section of a positive electrode active material particle or a positive electrode active material precursor particle is observed through a transmission electron microscope (TEM), wherein it may be composed of a single grain, or may also be composed of a plurality of grains.

In the present invention, after measuring a minor axis length and a major axis length of each primary particle in a cross-sectional TEM image of the positive electrode active material precursor or positive electrode active material particle, an aspect ratio of the primary particle may be calculated as a ratio of the major axis length to the minor axis length measured, and an average value may be measured by a method of calculating an arithmetic average value of the measured aspect ratios of the primary particles.

In the present invention, the expression "secondary particle" denotes a secondary structure formed by aggregation of a plurality of primary particles. An average particle diameter of the secondary particle may be measured using a particle size analyzer, and, in the present invention, Microtrac S3500 was used as the particle size analyzer.

The expression "particle diameter Dₙ" of the positive electrode active material in the present invention denotes a particle diameter at n% of cumulative distribution of volume according to the particle diameter. That is, D₅₀ is a particle diameter at 50% of the cumulative distribution of volume according to the particle diameter, D₉₀ is a particle diameter at 90% of the cumulative distribution of volume according to the particle diameter, and D₁₀ is a particle diameter at 10% of the cumulative distribution of volume according to the particle diameter. The Dₙ may be measured by using a laser diffraction method. Specifically, after dispersing measurement target powder in a dispersion medium (distilled water), the dispersion medium is introduced into a commercial laser diffraction particle size measurement instrument (e.g., Microtrac S3500) and a particle size distribution is calculated by measuring a difference in diffraction patterns due to a particle size when particles pass through a laser beam. The D₁₀, D₅₀, and D₉₀ may be measured by calculating particle diameters at 10%, 50%, and 90% of the cumulative distribution of volume according to the particle diameter using the measurement instrument.

### <Positive Electrode Active Material Precursor>

First, a method of preparing a positive electrode active material precursor according to the present invention will be described.

The method of preparing a positive electrode active material precursor of the present invention includes the steps of: preparing a transition metal-containing solution containing cations of nickel (Ni), cobalt (Co), and manganese (Mn) and an aluminum-containing solution containing cations of aluminum (Al); and respectively adding the transition metal-containing solution and the aluminum-containing solution to a reactor, and forming a positive electrode active material precursor by a co-precipitation reaction while adding a basic aqueous solution and an ammonium solution.

The method of preparing a positive electrode active material precursor will be described in detail for each step.

First, a transition metal-containing solution containing cations of nickel (Ni), cobalt (Co), and manganese (Mn) and an aluminum-containing solution containing cations of aluminum (Al) are prepared.

The transition metal-containing solution, for example, may include a nickel (Ni)-containing raw material, a cobalt (Co)-containing raw material, and a manganese (Mn)-containing raw material.

The nickel (Ni)-containing raw material, for example, may be nickel-containing acetic acid salts, nitrates, sulfates, halides, sulfides, hydroxides, oxides, or oxyhydroxides, and may specifically be Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·O6H₂O, a fatty acid nickel salt, a nickel halide, or a combination thereof, but the present invention is not limited thereto.

The cobalt (Co)-containing raw material may be cobalt-containing acetic acid salts, nitrates, sulfates, halides, sulfides, hydroxides, oxides, or oxyhydroxides, and may specifically be Co(OH)₂, CoOOH, Co(OCOCH₃)₂·4H₂O, Co(NO₃)₂·6H₂O, CoSO₄, Co(SO₄)₂·7H₂O, or a combination thereof, but the present invention is not limited thereto.

The manganese (Mn)-containing raw material, for example, may be manganese-containing acetic acid salts, nitrates, sulfates, halides, sulfides, hydroxides, oxides, oxyhydroxides, or a combination thereof, and may specifically be a manganese oxide such as Mn₂O₃, MnO₂, and Mn₃O₄; a manganese salt such as MnCO₃, Mn(NO₃)₂, MnSO₄, manganese acetate, manganese dicarboxylate, manganese citrate, and a fatty acid manganese salt; a manganese oxyhydroxide, manganese chloride, or a combination thereof, but the present invention is not limited thereto.

The transition metal-containing solution may be prepared by adding the nickel (Ni)-containing raw material, the cobalt (Co)-containing raw material, and the manganese (Mn)-containing raw material to a solvent, specifically water, or a mixture of water and an organic solvent (e.g., alcohol etc.) which may be uniformly mixed with the water, or may be prepared by mixing an aqueous solution of the nickel (Ni)-containing raw material, an aqueous solution of the cobalt (Co)-containing raw material, and the manganese (Mn)-containing raw material. The transition metal-containing solution may contain 70 atm% to 99 atm%, 80 atm% to 98 atm%, 85 atm% to 98 atm%, or 88 atm% to 95 atm% of nickel among total transition metals.

Also, the transition metal-containing solution may contain greater than 0 atm% to less than 0.3 atm%, 0.01 atm% or more to less than 0.2 atm%, 0.01 atm% or more to less than 0.15 atm%, or 0.01 atm% or more to less than 0.12 atm% of cobalt among the total transition metals.

Furthermore, the transition metal-containing solution may contain greater than 0 atm% to less than 0.3 atm%, 0.01 atm% or more to less than 0.2 atm%, 0.01 atm% or more to less than 0.15 atm%, or 0.01 atm% or more to less than 0.12 atm% of manganese among the total transition metals.

The aluminum-containing solution includes an aluminum (Al)-containing raw material, and the aluminum (Al)-containing raw material, for example, may be aluminum chloride, aluminum acetate, aluminum nitrate, aluminum hydroxide, or a combination thereof, but the present invention is not limited thereto.

The aluminum-containing solution may be prepared by adding the aluminum (Al)-containing raw material to a solvent, specifically water, or a mixture of water and an organic solvent (e.g., alcohol etc.) which may be uniformly mixed with the water.

Next, the transition metal-containing solution and the aluminum-containing solution are respectively added to a reactor, and a positive electrode active material precursor is formed by a co-precipitation reaction while adding a basic aqueous solution and an ammonium solution.

In the preparation method according to an embodiment of the present invention, the transition metal-containing solution and the aluminum-containing solution are respectively added to a reactor. Conventionally, when preparing an aluminum-doped positive electrode active material precursor, a metal aqueous solution was prepared by mixing all of a nickel-containing raw material, a cobalt-containing raw material, a manganese-containing raw material, and an aluminum-containing raw material, and it was common that the metal aqueous solution was coprecipitated to form precursor particles. However, according to such a conventional method, since aluminum cations contained in the metal aqueous solution reacted with anions present in the metal aqueous solution to form aluminum sulfate, it may be a factor interfering with particle growth. Particularly, in a case in which a nickel content in the metal aqueous solution was 70 atm% or more and an aluminum content was 1 atm% or more, such a problem was particularly prominent, and it was difficult to prepare a precursor having a desired size.

However, if the transition metal-containing solution containing nickel, cobalt, and manganese and the aluminum-containing solution are separately formed and then added to the reactor according to the embodiment of the present invention, since the growth of precursor particles is not inhibited even in the case that the nickel content is 70 atm% or more and the aluminum content is 1 mol% or more, the precursor particles may be grown to a desired size.

Also, in a case in which the co-precipitation reaction is performed using the transition metal-containing solution and the aluminum-containing solution which are separately formed as in the present invention, an orientation of primary particles and arrangement of crystal planes may be specifically controlled. Specifically, in a case in which a positive electrode active material precursor is prepared according to the method of the present invention, the positive electrode active material precursor including crystallines, in which major axes of the primary particles are arranged in a direction from a center of a secondary particle toward a surface thereof and a (001) plane is arranged parallel to the major axis of the primary particle, may be prepared.

Primary particle arrangement and crystalline structure of the positive electrode active material are affected by the primary particle arrangement and crystalline structure of the positive electrode active material precursor. In a case in which a positive electrode active material is prepared by using the positive electrode active material precursor having a structure in which the major axes of the primary particles are arranged in the direction from the center of the secondary particle toward the surface thereof, that is, a radial arrangement structure, primary particles of the positive electrode active material are also arranged in a direction from a center of a secondary particle toward a surface thereof. Since lithium ions in the positive electrode active material particle move along an interface between the primary particles, a movement path of the lithium ions in the particle is shortened when the primary particles are arranged radially, and thus, an effect of improving lithium mobility may be obtained.

The (001) plane of the positive electrode active material precursor is converted to a (003) plane after sintering. Thus, the positive electrode active material, which is prepared by using the positive electrode active material precursor including crystallines with the (001) plane arranged parallel to the major axis of the primary particle, includes crystallines in which the (003) plane is arranged parallel to a major axis direction of the primary particle. The (003) plane in the lithium transition metal oxide is a stable crystal plane in which intercalation/deintercalation of lithium is not possible. In a case in which the (003) plane is arranged parallel to the major axis direction of the primary particle, since the stable (003) plane is formed widely on a surface of the primary particle, structural degradation due to the intercalation/deintercalation of lithium ions may be minimized, and thus, an effect of improving life characteristics may be obtained.

The transition metal-containing solution and the aluminum-containing solution may be added in amounts such that a molar ratio of total transition metals (i.e., Ni+Co+Mn) contained in the transition metal-containing solution : aluminum contained in the aluminum-containing solution is in a range of 0.99 : 0.01 to 0.90 : 0.10, preferably 0.99 : 0.01 to 0.92 : 0.08, and more preferably 0.99 : 0.01 to 0.95 : 0.05. When the amounts of the transition metal-containing solution and aluminum-containing solution added satisfy the above range, a positive electrode active material precursor having a desired composition may be prepared.

The ammonium solution, as a complexing agent, for example, may include NH₄OH, (NH₄)₂SO₄, NH₄NO₃, NH₄Cl, CH₃COONH₄, NH₄CO₃, or a combination thereof, but the present invention is not limited thereto. The ammonium solution may be used in the form of an aqueous solution, and, in this case, water or a mixture of water and an organic solvent (specifically, alcohol etc.), which may be uniformly mixed with the water, may be used as a solvent.

The basic solution, as a precipitant, may include a hydroxide of alkali metal or alkaline earth metal, such as NaOH, KOH, or Ca(OH)₂, a hydrate thereof, or an alkaline compound of a combination thereof. The basic solution may also be used in the form of an aqueous solution, and, in this case, water or a mixture of water and an organic solvent (specifically, alcohol etc.), which may be uniformly mixed with the water, may be used as a solvent.

The basic solution is added to adjust a pH of a reaction solution, wherein an amount of the alkaline compound may be adjusted to maintain the pH of the reaction solution during the co-precipitation reaction to be 10.5 to 12.2, preferably 11.0 to 11.5, and more preferably 11.3 to 11.45.

The co-precipitation reaction may be performed in an inert atmosphere such as nitrogen or argon, and may be performed at a temperature in the reactor during the co-precipitation reaction of 45°C to 65°C, preferably 50°C to 60°C, and more preferably 53°C to 58°C.

When the pH of the reaction solution, the reactor temperature, and the atmosphere satisfy the above conditions, since crystallinity of the precursor particles is increased and a ratio of the (001) plane is increased, the effect of improving the life characteristics may be obtained.

Next, a positive electrode active material precursor according to the present invention will be described.

The positive electrode active material precursor according to the present invention is prepared according to the method of the present invention, wherein it is composed of a hydroxide represented by the following Formula 1, is a secondary particle in which a plurality of primary particles are aggregated, and includes crystallines in which major axes of the primary particles are arranged in a direction from a center of the secondary particle toward a surface thereof, and a (001) plane of the primary particle is arranged parallel to the major axis of the primary particle.

[Formula 1] Niₓ₁Co_{y1}Mn_{z1}Alₛ₁(OH)₂

x1 represents a molar ratio of nickel among total metallic elements in the transition metal hydroxide, wherein x1 may satisfy 0.7≤x1≤0.99, 0.8≤x1≤0.98, 0.85≤x1≤0.98, or 0.88≤x1≤0.95. In a case in which a nickel content in the transition metal hydroxide satisfies the above range, a positive electrode active material having high capacity characteristics may be prepared.
y1 represents a molar ratio of cobalt among the total metallic elements in the transition metal hydroxide, wherein y1 may satisfy 0<y1<0.3, 0.01≤y1<0.2, 0.01≤y1<0.14, or 0.01≤y1<0.12.
z1 represents a molar ratio of manganese among the total metallic elements in the transition metal hydroxide, wherein z1 may satisfy 0<z1<0.3, 0.01≤z1<0.2, 0.01≤z1<0.14, or 0.01≤z1<0.12.
s1 represents a molar ratio of aluminum among the total metallic elements in the transition metal hydroxide, wherein s1 may satisfy 0.01≤s1≤0.1, 0.01≤s1≤0.08, or 0.01≤s1≤0.05. In a case in which an aluminum (Al) content in the transition metal hydroxide satisfies the above range, cation disordering and the formation of oxygen vacancy during the preparation of the positive electrode active material may be suppressed, and, accordingly, life characteristics and resistance increase rate characteristics may be improved.

In the positive electrode active material precursor, it is desirable that aluminum (Al) is uniformly distributed throughout the entire particle. That is, aluminum may be contained without a concentration gradient in the secondary particle of the positive electrode active material precursor. Since the aluminum (Al) is uniformly distributed in the secondary particle without the concentration gradient, an aluminum (Al) agglomeration phenomenon may be suppressed to minimize capacity reduction and increase an effect of improving the life characteristics and resistance increase rate characteristics with a small amount of the aluminum (Al).

Preferably, the positive electrode active material precursor of the present invention may be one in which nickel, manganese, cobalt, and aluminum are distributed in a uniform concentration throughout the entire secondary particle without a concentration gradient.

The positive electrode active material precursor according to the present invention may be a secondary particle in which a plurality of primary particles are aggregated, and major axes of the primary particles may be arranged in a direction from the center of the secondary particle toward the surface thereof. As described above, since the primary particle orientation of the positive electrode active material shows the same tendency as the primary particle orientation of the positive electrode active material precursor and the lithium ions in the positive electrode active material particle move along the interface between the primary particles, the movement path of the lithium ions in the positive electrode active material particle is shortened when the positive electrode active material precursor has a structure in which the major axes of the primary particles are arranged in the direction from the center of the secondary particle toward the surface thereof, that is, a radial structure, and thus, the effect of improving the lithium mobility may be obtained.

Also, the primary particle of the positive electrode active material precursor according to the present invention includes crystallines in which a (001) plane is arranged parallel to the major axis of the primary particle. Since the (001) plane of the positive electrode active material precursor is converted to a (003) plane after sintering, the primary particle of the positive electrode active material, which is prepared by using the positive electrode active material precursor including the crystallines as described above, includes crystallines in which the (003) plane is arranged parallel to the major axis of the primary particle. In the case that the (003) plane is arranged parallel to the major axis of the primary particle, an area of the (003) plane exposed to the interface between the primary particles is increased. Since the (003) plane is a stable crystal plane in which the intercalation/deintercalation of the lithium ions is not possible, the structural degradation of the active material due to the intercalation/deintercalation of the lithium ions is suppressed when the external exposed area of the (003) plane is large, and, accordingly, the effect of improving the life characteristics may be obtained.

The primary particle of the positive electrode active material precursor may have a columnar shape, and, in this case, an aspect ratio of the primary particle may be 3 or more. More preferably, the aspect ratio of the primary particle of the positive electrode active material precursor may be in a range of 3 to 15, for example, 5 to 8. When the aspect ratio of the primary particle of the positive electrode active material precursor satisfies the above range, there is an effect of shortening a lithium movement path inside and outside the primary particle.

An average particle diameter D50 of the secondary particle of the positive electrode active material precursor of the present invention may be in a range of 3 µm to 20 µm, 5 µm to 20 µm, or 8 µm to 20 µm. When the average particle diameter of the secondary particle of the positive electrode active material precursor satisfies the above range, advantageous effects may be obtained in terms of energy density, lifetime, and gas generation.

### <Positive Electrode Active Material>

Next, a positive electrode active material according to the present invention and a preparation method thereof will be described.

The positive electrode active material according to the present invention may be prepared through a step of mixing the above-described positive electrode active material precursor of the present invention with a lithium source and sintering the mixture to form a lithium transition metal oxide.

The positive electrode active material precursor is the same as described above.

As the lithium source, lithium-containing sulfates, nitrates, acetic acid salts, carbonates, oxalates, citrates, halides, hydroxides, or oxyhydroxides may be used, and these materials are not particularly limited as long as they may be dissolved in water. Specifically, the lithium source may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, or Li₃C₆H₅O₇, and any one thereof or a mixture of two or more thereof may be used.

The positive electrode active material precursor and the lithium source may be mixed and sintered at 730°C to 830°C to form a lithium transition metal oxide. Preferably, the sintering may be performed at 750°C to 810°C, for example, 780°C to 800°C, and the sintering may be performed for 5 hours to 20 hours, for example, 8 hours to 15 hours.

If necessary, a raw material containing doping element M¹ may be further mixed during the sintering. M¹, for example, may be at least one selected from the group consisting of Zr, B, W, Mg, Ce, Hf, Ta, La, Ti, Sr, Ba, F, P, and S, and the raw material containing the doping element M¹ may be M¹-containing acetates, nitrates, sulfates, halides, sulfides, hydroxides, oxides, oxyhydroxides, or a combination thereof. In a case in which M¹ is additionally mixed during the sintering, since the M¹ element is diffused into the lithium transition metal oxide and is doped by the sintering, an effect of improving structural stability of the positive electrode active material may be obtained.

The positive electrode active material of the present invention thus prepared includes a lithium transition metal oxide represented by Formula 2 below, wherein the lithium transition metal oxide is a secondary particle, in which a plurality of primary particles are aggregated, and includes crystallines in which major axes of the primary particles are arranged in a direction from a center of the secondary particle toward a surface thereof and a (003) plane of the primary particle is arranged parallel to the major axis of the primary particle.

[Formula 2] Liₐ[Ni_{b}Co_{c}Mn_{d}Alₑ]_{1-f}M¹_{f}O₂

In Formula 2, M¹ is a doping element doped in the lithium transition metal oxide, and, for example, may be at least one selected from the group consisting of Zr, B, W, Mg, Ce, Hf, Ta, La, Ti, Sr, Ba, F, P, and S.
a represents a molar ratio of lithium in the lithium transition metal oxide, wherein a may satisfy 0.8≤a≤1.2, 0.85≤a≤1.15, or 0.9≤a≤1.1.
b represents a molar ratio of nickel based on a total number of moles of transition metals in the lithium transition metal oxide, wherein b may satisfy 0.7≤b≤0.99, 0.8≤b≤0.98, 0.85≤b≤0.98, or 0.85≤b≤0.95.
c represents a molar ratio of cobalt based on the total number of moles of transition metals in the lithium transition metal oxide, wherein c may satisfy 0<c<0.3, 0.01≤c<0.2, 0.01≤c<0.14, or 0.01≤c<0.12.
d represents a molar ratio of manganese based on the total number of moles of transition metals in the lithium transition metal oxide, wherein d may satisfy 0<d<0.3, 0.01≤d<0.2, 0.01≤d<0.14, or 0.01≤d<0.12.
e represents a molar ratio of aluminum based on the total number of moles of transition metals in the lithium transition metal oxide, wherein e may satisfy 0.01≤e≤0.1, 0.01≤e≤0.08, or 0.01≤e≤0.05.
f represents a molar ratio of the doping element M1 doped in a transition metal layer in the lithium transition metal oxide, wherein f may satisfy 0≤f≤0.1, 0≤f≤0.05, or 0≤f≤0.03.

In the positive electrode active material, it is desirable that aluminum (Al) is uniformly distributed throughout the secondary particle. That is, aluminum may be contained without a concentration gradient in the secondary particle of the positive electrode active material. Since the aluminum (Al) is uniformly distributed in the secondary particle without the concentration gradient, the aluminum (Al) agglomeration phenomenon may be suppressed to minimize the capacity reduction and increase the effect of improving the life characteristics and resistance increase rate characteristics with the small amount of the aluminum (Al).

Preferably, the positive electrode active material of the present invention may be one in which nickel, manganese, cobalt, and aluminum are distributed in a uniform concentration throughout the secondary particle without a concentration gradient.

The positive electrode active material according to the present invention may be a secondary particle in which a plurality of primary particles are aggregated, and major axes of the primary particles may be arranged in a direction from the center of the secondary particle toward the surface thereof. Since the lithium ions in the positive electrode active material particle move along the interface between the primary particles, the movement path of the lithium ions in the positive electrode active material particle is shortened when the positive electrode active material has a structure in which the major axes of the primary particles are arranged in the direction from the center of the secondary particle toward the surface thereof, that is, a radial structure, and thus, the effect of improving the lithium mobility may be obtained.

Also, the primary particle of the positive electrode active material according to the present invention includes crystallines in which a (003) plane is arranged parallel to the major axis of the primary particle. In the case that the (003) plane is arranged parallel to the major axis of the primary particle, the area of the (003) plane exposed to the interface between the primary particles is increased. Since the (003) plane is a stable crystal plane in which the intercalation/deintercalation of the lithium ions is not possible, the structural degradation of the active material due to the intercalation/deintercalation of the lithium ions is suppressed when the external exposed area of the (003) plane is large, and, accordingly, the effect of improving the life characteristics may be obtained.

The primary particle of the positive electrode active material may have a columnar shape, and, in this case, an aspect ratio of the primary particle may be 1.5 or more, preferably 1.5 to 10, and more preferably 2.5 to 8, for example, 2.5 to 5. When the aspect ratio of the primary particle of the positive electrode active material satisfies the above range, there is an effect of shortening a lithium movement path inside and outside the primary particle.

An average particle diameter D50 of the secondary particle of the positive electrode active material of the present invention may be in a range of 3 µm to 20 µm, 5 µm to 20 µm, or 8 µm to 20 µm. When the average particle diameter of the secondary particle of the positive electrode active material satisfies the above range, advantageous effects may be obtained in terms of the energy density, lifetime, and gas generation.

### <Positive Electrode and Lithium Secondary Battery>

According to another embodiment of the present invention, provided are a positive electrode for a secondary battery and a lithium secondary battery which include the positive electrode active material prepared as described above.

Specifically, the positive electrode includes a positive electrode collector and a positive electrode active material layer which is disposed on the positive electrode collector and includes the positive electrode active material.

In the positive electrode, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

Also, the positive electrode active material layer may include a conductive agent and a binder in addition to the above-described positive electrode active material.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on a total weight of the positive electrode active material layer.

Furthermore, the binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a composition for forming a positive electrode active material layer, which includes the above-described positive electrode active material as well as selectively the binder and the conductive agent, is coated on the positive electrode collector, and the positive electrode may then be prepared by drying and rolling the coated positive electrode collector. In this case, types and amounts of the positive electrode active material, the binder, and the conductive agent are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

According to another embodiment of the present invention, an electrochemical device including the positive electrode is provided. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein the positive electrode is as described above. Also, the lithium secondary battery may further selectively include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer selectively includes a binder and a conductive agent in addition to the negative electrode active material. The negative electrode active material layer may be prepared by coating a composition for forming a negative electrode in the form of a slurry, which includes selectively the binder and the conductive agent as well as the negative electrode active material, on the negative electrode collector and drying the coated negative electrode collector, or may be prepared by casting the composition for forming a negative electrode on a separate support and then laminating a film separated from the support on the negative electrode collector.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0 < β < 2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Also, the binder and the conductive agent may be the same as those previously described in the positive electrode.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond, an aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

After 4 liters of distilled water was put in a reactor (capacity 20 L), the temperature was maintained at 58°C, a transition metal aqueous solution with a concentration of 2.29 mol/L, in which NiSO₄, CoSO₄, and MnSO₄ were mixed in amounts such that a molar ratio of nickel:cobalt:manganese was 88:5:7, and an Al(NO₃)₃ aqueous solution with a concentration of 1.145 mol/L were added to the reactor at rates of 500 ml/hr and 20 mL/hr, respectively, and a 9 wt% aqueous ammonia solution was continuously added to the reactor at a rate of 510 ml/hr. Also, a 15 wt% aqueous sodium hydroxide solution was added at a rate of 306 ml/hr, and the addition of the aqueous sodium hydroxide solution was adjusted so that a pH was maintained at 11.4.

In the first 30 minutes, nucleation was performed while stirring at 600 rpm, and, thereafter, particles were grown while stirring at 250 rpm to 600 rpm. When the inside of the batch-type reactor was filled by performing a co-precipitation reaction for 20 hours, the stirring was stopped, the precursor particles were precipitated, and, after removing a supernatant and leaving 4 L of the reactants, the reaction was performed again. The reaction was performed for a total of 40 hours to form precursor particles. The precursor particles were separated, washed in water, dried in a warm air dryer at 130°C for 12 hours or more, disintegrated, and sieved to prepare a positive electrode active material precursor having a composition of Ni_{0.86}Co_{0.05}Mn_{0.07}Al_{0.02}(OH)₂.

### Example 2

The positive electrode active material precursor prepared in Example 1, LiOH, and ZrO₂ were mixed in amounts such that a molar ratio of (Ni+Co+Mn+Al) : Li : Zr was 1:1.07:0.0015, and sintered at 790°C for 10 hours in an oxygen atmosphere to prepare a positive electrode active material which was doped with 1,500 ppm of Zr and had a molar ratio of Ni : Co : Mn : Al of 86 : 5 : 7 : 2.

### Comparative Example 1

After 4 liters of distilled water was put in a reactor (capacity 20 L), the temperature was maintained at 58°C, a transition metal aqueous solution with a concentration of 2.29 mol/L, in which NiSO₄, CoSO₄, MnSO₄, and AlSO₄ were mixed in amounts such that a molar ratio of nickel:cobalt:manganese:aluminum was 86:5:7:2, was added to the reactor at a rate of 500 ml/hr, and a 9 wt% aqueous ammonia solution was continuously added to the reactor at a rate of 510 ml/hr. Also, a 15 wt% aqueous sodium hydroxide solution was added at a rate of 306 ml/hr, and the addition of the aqueous sodium hydroxide solution was adjusted so that a pH was maintained at 11.4.

In the first 30 minutes, nucleation was performed while stirring at 600 rpm, and, thereafter, particles were grown while stirring at 250 rpm to 600 rpm. When the inside of the batch-type reactor was filled by performing a co-precipitation reaction for 20 hours, the stirring was stopped, the precursor particles were precipitated, and, after removing a supernatant and leaving 4 L of the reactants, the reaction was performed again. The reaction was performed for a total of 40 hours to form precursor particles. The precursor particles were separated, washed in water, dried in a warm air dryer at 130°C for 12 hours or more, disintegrated, and sieved to prepare a positive electrode active material precursor having a composition of Ni_{0.86}Co_{0.05}Mn_{0.07}Al_{0.02}(OH)₂.

### Comparative Example 2

After 4 liters of distilled water was put in a reactor (capacity 20 L), the temperature was maintained at 58°C, a transition metal aqueous solution with a concentration of 2.29 mol/L, in which NiSO₄, CoSO₄, and MnSO₄ were mixed in amounts such that a molar ratio of nickel:cobalt:manganese was 88:5:7, was added to the reactor at a rate of 510 ml/hr, and a 9 wt% aqueous ammonia solution was continuously added to the reactor at a rate of 510 ml/hr. Also, a 15 wt% aqueous sodium hydroxide solution was added at a rate of 306 ml/hr, and the addition of the aqueous sodium hydroxide solution was adjusted so that a pH was maintained at 11.4.

In the first 30 minutes, nucleation was performed while stirring at 600 rpm, and, thereafter, particles were grown while stirring at 250 rpm to 600 rpm. When the inside of the batch-type reactor was filled by performing a co-precipitation reaction for 20 hours, the stirring was stopped, the precursor particles were precipitated, and, after removing a supernatant and leaving 4 L of the reactants, the reaction was performed again. The reaction was performed for a total of 40 hours to form precursor particles having a composition of Ni_{0.88}Co_{0.05}Mn_{0.07}(OH)₂.

The above-prepared positive electrode active material precursor, LiOH, Al₂O₃, and ZrO₂ were mixed in amounts such that a molar ratio of (Ni+Co+Mn) : Li : Al : Zr was 1:1.07:0.02:0.0015, and sintered at 770°C for 10 hours in an oxygen atmosphere to prepare a positive electrode active material which was doped with 1,500 ppm of Zr and had a molar ratio of Ni : Co : Mn : Al of 86 : 5 : 7 : 2.

### [Experimental Example 1: Positive Electrode Active Material Precursor and Positive Electrode Active Material Identification]

Crystal structures and aspect ratios of primary particles of the positive electrode active material precursors and the positive electrode active material of Examples 1 and 2 and Comparative Example 1 were measured through transmission electron microscope (TEM) analysis. The TEM analysis was performed using a selected area diffraction pattern (SADP) and/or FAST Fourier Transform (FFT) .

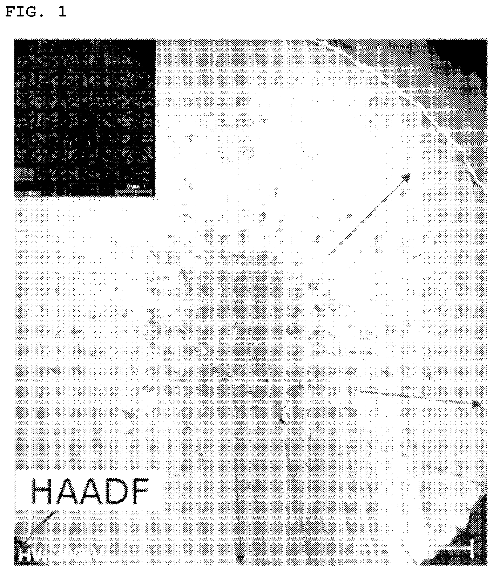

The results thereof are presented in FIGS. 1 to 3.

FIG. 1 is a cross-sectional TEM image of the positive electrode active material precursor prepared in Example 1. As illustrated in FIG. 1, in the positive electrode active material precursor of Example 1, Al was uniformly distributed throughout an entire particle, and major axes of primary particles were arranged in a direction from a center of a secondary particle toward a surface thereof.

Also, an aspect ratio of the primary particle was calculated by measuring a minor axis length and a major axis length of the primary particle through TEM image analysis, and the measured aspect ratio of the primary particle was an average of 6.7.

Furthermore, as a result of confirming a crystalline structure through the SADP, it was confirmed that (001) planes were arranged parallel to the major axis of the primary particle. Directions of the (001) planes were indicated by arrows.

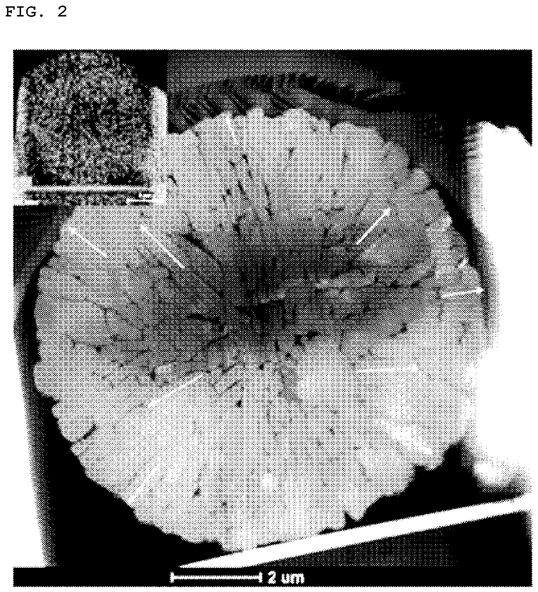

FIG. 2 is a cross-sectional TEM image of the positive electrode active material prepared in Example 2. As illustrated in FIG. 2, in the positive electrode active material of Example 2, Al was uniformly distributed throughout an entire secondary particle, and major axes of primary particles were arranged in a direction from a center of the secondary particle toward a surface thereof.

Also, an aspect ratio of the primary particle was calculated by measuring a minor axis length and a major axis length of the primary particle through TEM image analysis, and the measured aspect ratio of the primary particle was an average of 3.2.

Furthermore, as a result of confirming a crystalline structure through the SADP, it was confirmed that (003) planes were arranged parallel to the major axis of the primary particle. Directions of the (003) planes were indicated by arrows.

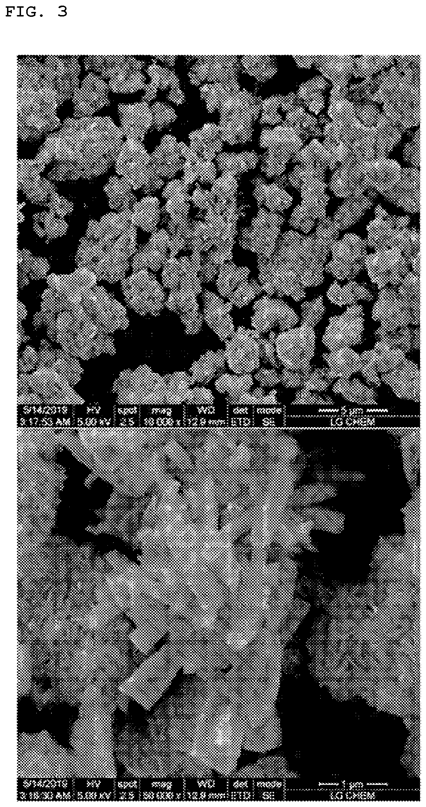

FIG. 3 is a scanning electron microscope (SEM) image of the positive electrode active material precursor prepared in Comparative Example 1. As illustrated in FIG. 3, the positive electrode active material precursor of Comparative Example 1 shows a state in which particles in the form of a small NCM seed and a compound of Al and Sulfur exist separately. Also, D50 of a secondary particle was 5 µm or less even though the reaction was performed for 40 hours, wherein it may be understood that particle growth hardly occurred.

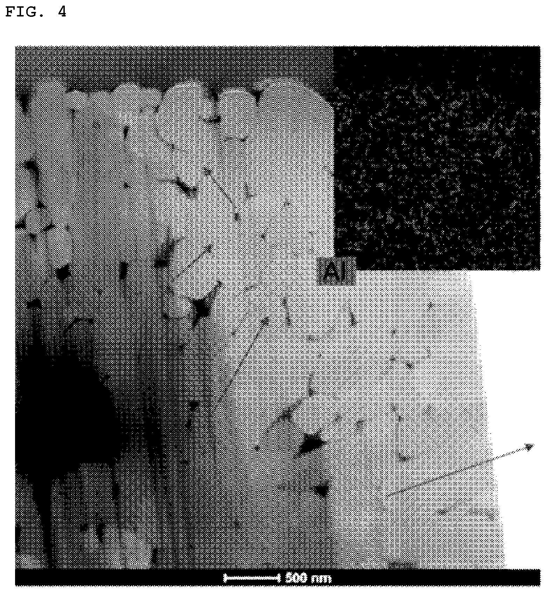

FIG. 4 is a cross-sectional TEM image of the positive electrode active material prepared in Comparative Example 2. As illustrated in FIG. 4, in the positive electrode active material of Comparative Example 2, Al was uniformly distributed throughout an entire secondary particle, and major axes of primary particles were arranged in a direction from a center of the secondary particle toward a surface thereof.

Also, an aspect ratio of the primary particle was calculated by measuring a minor axis length and a major axis length of the primary particle through TEM image analysis, and the measured aspect ratio of the primary particle was an average of 2.4.

Furthermore, as a result of confirming a crystalline structure through the SADP, it was confirmed that (003) planes were distributed in various directions. The directions of the (003) planes were indicated by arrows.

### [Experimental Example 2: Life Characteristics, Resistance Increase Rate Characteristics]

Each of the positive electrode active materials prepared in Example 2 and Comparative Example 2, a carbon black conductive agent, and a PVdF binder were mixed in an N-methylpyrrolidone solvent at a weight ratio of 96:2:2 to prepare a positive electrode material mixture, and one surface of an aluminum current collector was coated with the positive electrode material mixture, dried at 100°C, and then rolled to prepare a positive electrode.

Lithium metal was used as a negative electrode.

Each lithium secondary battery was prepared by preparing an electrode assembly by disposing a porous polyethylene separator between the positive electrode and negative electrode prepared as described above, disposing the electrode assembly in a case, and then injecting an electrolyte solution into the case. In this case, the electrolyte solution was prepared by dissolving 1.0 M lithium hexafluorophosphate (LiPF₆) in an organic solvent composed of ethylene carbonate/ethylmethyl carbonate/diethyl carbonate (mixing volume ratio of EC/EMC/DEC=3/4/3).

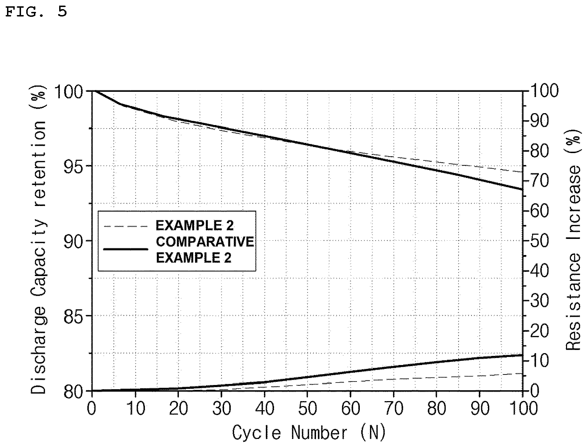

Each lithium secondary battery cell prepared as described above was charged at a constant current of 1 C to 4.25 V at 45°C and cut-off charged at 3 C. Thereafter, each lithium secondary battery cell was discharged at a constant current of 0.33 C to a voltage of 3.0 V. The charging and discharging behaviors were set as one cycle, and, after this cycle was repeated 100 times, capacity retention and resistance increase rate according to cycles were measured. With respect to the capacity retention, its value was calculated by dividing capacity in a 100^{th} cycle by initial capacity and then multiplying by 100, and, with respect to the resistance increase rate, its value was calculated by dividing resistance in the 100^{th} cycle by initial resistance and then multiplying by 100. The results thereof are presented in the following Table 1 and FIG. 5.

**[Table 1]**

| | 100 cycles (%) | |
|---|---|---|
| | Capacity | Resistance increase rate |
| Example 2 | 94.6 | 5.6 |
| Comparative Example 2 | 93.4 | 11.9 |

Referring to Table 1 and FIG. 5, capacity retention and resistance increase rate characteristics of the positive electrode active material of Example 2 were significantly better, and, with respect to the positive electrode active material of Comparative Example 2 prepared through Al dry doping, capacity retention and resistance increase rate characteristics were inferior.

## Claims

1. A positive electrode active material precursor for a secondary battery, the positive electrode active material precursor composed of a hydroxide represented by Formula 1,
wherein the positive electrode active material precursor is a secondary particle, in which a plurality of primary particles are aggregated, and comprises crystallines in which major axes of the primary particles are arranged in a direction from a center of the secondary particle toward a surface thereof and a (001) plane of the primary particle is arranged parallel to the major axis of the primary particle:
[Formula 1] Niₓ₁Co_{y1}Mn_{z1}Alₛ₁(OH)₂
wherein, in Formula 1, 0.7≤x<10.99, 0<y1<0.3, 0<z1<0.3, and 0.01≤s1≤0.1.

2. The positive electrode active material precursor for a secondary battery of claim 1, wherein an aspect ratio of the primary particle is 3 or more.

3. The positive electrode active material precursor for a secondary battery of claim 1, wherein an aspect ratio of the primary particle is in a range of 3 to 15.

4. The positive electrode active material precursor for a secondary battery of claim 1, wherein, in Formula 1, 0.85≤x1≤0.98, 0.01≤y1<0.14, and 0.01≤z1<0.14.

5. The positive electrode active material precursor for a secondary battery of claim 1, wherein aluminum (Al) is uniformly distributed throughout the entire secondary particle of the positive electrode active material precursor.

6. The positive electrode active material precursor for a secondary battery of claim 1, wherein nickel, manganese, cobalt, and aluminum are distributed in a uniform concentration throughout the entire secondary particle of the positive electrode active material precursor without a concentration gradient.

7. The positive electrode active material precursor for a secondary battery of claim 1, wherein an average particle diameter D50 of the secondary particle of the positive electrode active material precursor is in a range of 3 µm to 20 µm.

8. A method of preparing the positive electrode active material precursor for a secondary battery of claim 1, the method comprising:
preparing a transition metal-containing solution containing cations of nickel (Ni), cobalt (Co), and manganese (Mn) and an aluminum-containing solution containing cations of aluminum (Al); and
respectively adding the transition metal-containing solution and the aluminum-containing solution to a reactor, and forming a positive electrode active material precursor by a co-precipitation reaction while adding a basic aqueous solution and an ammonium solution.

9. The method of claim 8, wherein a pH of a reaction solution during the co-precipitation reaction is in a range of 10.5 to 12.2.

10. The method of claim 8, wherein a temperature in the reactor during the co-precipitation reaction is in a range of 45°C to 65°C.

11. The method of claim 8, wherein the aluminum-containing solution comprises aluminum chloride, aluminum acetate, aluminum nitrate, aluminum hydroxide, or a combination thereof.

12. A method of preparing a positive electrode active material for a secondary battery, the method comprising mixing the positive electrode active material precursor prepared according to claim 7 with a lithium source and sintering the mixture to form a lithium transition metal oxide.

13. A positive electrode active material for a secondary battery, the positive electrode active material comprising a lithium transition metal oxide represented by Formula 2,
wherein the lithium transition metal oxide is a secondary particle, in which a plurality of primary particles are aggregated, and
comprises crystallines in which major axes of the primary particles are arranged in a direction from a center of the secondary particle toward a surface thereof and
a (003) plane of the primary particle is arranged parallel to the major axis of the primary particle:
[Formula 2] Liₐ[Ni_{b}Co_{c}Mn_{d}Alₑ]_{1-f}M¹_{f}O₂
wherein, in Formula 2, M¹ is at least one selected from the group consisting of Zr, B, W, Mg, Ce, Hf, Ta, La, Ti, Sr, Ba, F, P, and S, and 0.8≤a≤1.2, 0.7≤b≤0.99, 0<c<0.3, 0<d<0.3, 0.01≤e≤0.1, and 0≤f≤0.1.

14. The positive electrode active material for a secondary battery of claim 13, wherein an aspect ratio of the primary particle is 1.5 or more.

15. The positive electrode active material precursor for a secondary battery of claim 13, wherein, in Formula 2, 0.85≤b≤0.98, 0.01≤c<0.14, and 0.01≤d<0.14.

16. The positive electrode active material for a secondary battery of claim 13, wherein nickel, manganese, cobalt, and aluminum are distributed in a uniform concentration throughout the entire secondary particle of the positive electrode active material without a concentration gradient.

17. The positive electrode active material for a secondary battery of claim 13, wherein an average particle diameter D50 of the secondary particle of the positive electrode active material is in a range of 3 µm to 20 µm.

18. A positive electrode for a secondary battery, the positive electrode comprising the positive electrode active material of claim 13.

19. A lithium secondary battery comprising the positive electrode of claim 18.
